(19) **Europäisches Patentamt**
**European Patent Office**
**Office européen des brevets**

(11) **EP 4 542 895 A1**

(12) **EUROPEAN PATENT APPLICATION**
published in accordance with Art. 153(4) EPC

(43) Date of publication:
23.04.2025 Bulletin 2025/17

(51) International Patent Classification (IPC):
*H04L 1/00* (2006.01)

(21) Application number: 23838664.3

(22) Date of filing: 21.06.2023

(86) International application number:
PCT/CN2023/101715

(87) International publication number:
WO 2024/012170 (18.01.2024 Gazette 2024/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.07.2022 CN 202210808598

(71) Applicant: Sanechips Technology Co., Ltd.
Shenzhen, Guangdong 518055 (CN)

(72) Inventors:
• LONG, Zhijun
Shenzhen, Guangdong 518055 (CN)
• ZHANG, Junling
Shenzhen, Guangdong 518055 (CN)

(74) Representative: Canzler & Bergmeier
Patentanwälte
Partnerschaft mbB
Despag-Straße 6
85055 Ingolstadt (DE)

(54) **PSFCH SIGNAL DETECTION METHOD AND DEVICE, STORAGE MEDIUM, AND ELECTRONIC DEVICE**

(57) The present application provides a physical sidelink feedback channel (PSFCH) signal detection method and device, a storage medium, and an electronic device. The method comprises: determining the sum of weighted powers of a received PSFCH signal and a local NACK sequence; determining a peak phase and a peak power according to the sum of the weighted powers, and according to the sum of the weighted powers and the peak power, determining a base power and determining the ratio of the peak power to the base power; determining an output weight value of the PSFCH signal according to the peak phase and the ratio, and setting an output state for the PSFCH signal; and detecting the PSFCH signal according to the output weight value and the output state.

FIG.2

EP 4 542 895 A1

**Description**

CROSS-REFERENCE TO RELATED APPLICATIONS

This application claims priority to the patent application No. 202210808598.1 filed with the China Patent Office on July 11, 2022, which is incorporated by reference hereby in its entirety.

TECHNICAL FIELD

The present application relates to, but is not limited to, the field of communications.

BACKGROUND

The 3GPP sidelink communication system is widely applied in Vehicle-to-everything (V2X) communications, and has been developed from LTE Sidelink to NR Sidelink now. An important development of NR Sidelink over LTE Sidelink is a hybrid automatic repeat request (HARQ) process supporting physical sidelink shared channel (PSSCH), in which HARQ information transmission and reception between terminals are implemented by adding a PSFCH to the NR Sidelink.

The 3GPP R16 NR protocol defines that a physical sidelink feedback channel (PSFCH) of Sidelink is used by a user equipment (UE) to receive the PSSCH channel and then feed back correct reception ACK or reception error NACK information to the sending UE for HARQ retransmission. There are two transmission methods: in a first method, a receiving UE transmits an NACK or ACK sequence to feed back reception error (NACK sequence) or correct reception (ACK sequence) information of a PSSCH to a sending UE; and in a second method, a receiving UE transmits a NACK sequence or does not transmit any information (a Not Active sequence, referred to as NA sequence for short) to feed back reception error (NACK sequence) or correct reception (NA sequence) information of a PSSCH to a sending UE. Both the receiving UE and the sending UE transmit and receive the PSFCH in one of the two methods through unified higher-layer signaling.

When the received signal has a relatively low signal noise ratio (SNR), that is, when an input signal of an amplifier has a relatively low power, the detection performance is degraded due to high randomness of a channel impulse response (CIR) peak after correlation between a local sequence and a received additive white Gaussian noise (AWGN). Especially when the second method is used for transmitting a PSFCH, since the NA sequence contains only AWGN, there is a higher probability of mistaking the transmitted NACK sequence as an NA sequence, or mistaking the NA sequence as an NACK sequence, under a low SNR.

For the problem of the high error detection probability of the PSFCH signal in the case of a relatively low SNR of the received signal in the existing art, no solution has been proposed yet.

SUMMARY

The present application provides a PSFCH signal detection method and device, a storage medium, and an electronic device.

According to one aspect of the present application, there is provided a PSFCH signal detection method, including: determining a sum of weighted powers of a received PSFCH signal and a local NACK sequence; determining a peak phase and a peak power based on the sum of weighted powers, determining a base power based on the sum of weighted powers and the peak power, and determining a ratio of the peak power to the base power; determining an output weight of the PSFCH signal based on the peak phase and the ratio, and setting an output state for the PSFCH signal; and detecting the PSFCH signal based on the output weight and the output state.

According to another aspect of the present application, there is further provided a PSFCH signal detection device, including: a first determination module configured to determine a sum of weighted powers of a received PSFCH signal and a local NACK sequence; a second determination module configured to determine a peak phase and a peak power based on the sum of weighted powers, determine a base power based on the sum of weighted powers and the peak power, and determine a ratio of the peak power to the base power; a third determination module configured to determine an output weight of the PSFCH signal based on the peak phase and the ratio, and set an output state for the PSFCH signal; and a detection module configured to detect the PSFCH signal based on the output weight and the output state.

According to another aspect of the present application, there is further provided a computer-readable storage medium having a computer program stored thereon, wherein the computer program, when executed by a processor, causes the processor to implement operations of any method described herein.

According to another aspect of the present application, there is further provided an electronic device, including a memory and a processor, wherein the memory has a computer program stored thereon, and the processor is configured to execute the computer program to perform operations of any method described herein.

BRIEF DESCRIPTION OF DRAWINGS

FIG. 1 is a hardware block diagram of a mobile terminal for implementing a PSFCH signal detection method of the present application;

FIG. 2 is a flowchart of a PSFCH signal detection method according to the present application;

FIG. 3 is a schematic diagram of a PSFCH reception detection system;

FIG. 4 is a schematic diagram of error detection performance verification for NACK and NA sequences;

FIG. 5 is a schematic diagram of a PSFCH detection system according to the present application;

FIG. 6 is a schematic diagram of error detection performance verification for NACK and NA sequences according to the present application; and

FIG. 7 is a block diagram of a PSFCH signal detection device according to the present application.

DETAIL DESCRIPTION OF EMBODIMENTS

Implementations of the present application will be described in detail below with reference to the drawings in conjunction with the implementations.

It should be noted that terms "first", "second", and the like in the description, claims and drawings of the present application are used for the purpose of distinguishing similar objects instead of indicating a specific order or sequence.

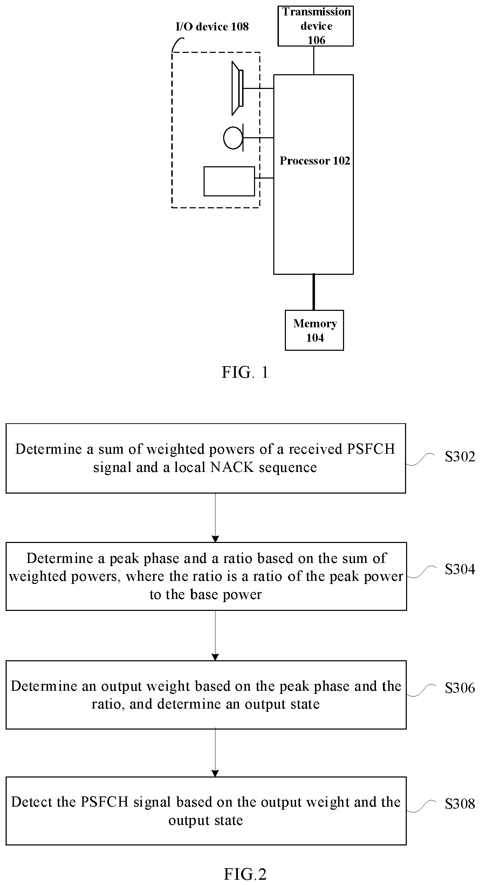

The method provided in the present application may be implemented in a mobile terminal, a computer terminal or any other computing apparatus. Taking the case of running on a mobile terminal as an example, FIG. 1 is a hardware block diagram of a mobile terminal for implementing a PSFCH signal detection method of the present application, and as shown in FIG. 1, the mobile terminal may include one or more processors 102 (merely one is shown in FIG. 1) (the processor 102 may include, but is not limited to, a microprocessor (MCU) or a programmable logic device like FPGA, or other processing devices) and a memory 104 configured to store data. The mobile terminal may further include a transmission device 106 for a communication function and an input/output (I/O) device 108. It will be understood by those ordinary skilled in the art that the structure shown in FIG. 1 is merely illustrative, and does not form any limitation to the structure of the above mobile terminal. For example, the mobile terminal may include more or fewer components than those shown in FIG. 1, or have a different configuration than that shown in FIG. 1.

The memory 104 may be configured to store a computer program, for example, an application software program or a module, such as a computer program corresponding to the PSFCH signal detection method of the present application, while the processor 102 may, by executing the computer program stored in the memory 104, perform various functional applications and PSFCH signal detection and processing, that is, implement the above method. The memory 104 may include a high-speed random access memory, and may further include a non-volatile memory, such as one or more magnetic storage devices, a flash, or any other non-volatile solid state memory. In some examples, the memory 104 may further include a memory remote to the processor 102, which may be connected to the mobile terminal via a network. Examples of the network include, but are not limited to, the Internet, intranets, local area networks, mobile communication networks, and combinations thereof.

The transmission device 106 is configured to receive or transmit data via a network. An example of the network may include a wireless network provided by a communication provider of the mobile terminal. In one example, the transmission device 106 includes a network interface controller (NIC) that may be connected to another network device through a base station to communicate with the Internet. In one example, the transmission device 106 may be a radio frequency (RF) module configured to communicate with the Internet wirelessly.

The present application provides a PSFCH signal detection method operating on the mobile terminal or network architecture as described above. FIG. 2 is a flowchart of a PSFCH signal detection method according to the present application. As shown in FIG. 2, the flow includes the following operations S302 to S308.

At operation S302, determining a sum of weighted powers of a received PSFCH signal and a local NACK sequence.

In one implementation, the sum of weighted powers may be determined in operation S302 by:

performing a dot product operation of a PSFCH frequency domain signal $R(iRx, m)$ received at a receiving port $iRx$ on a subcarrier $m$ and a conjugate $x_{\mathrm{NACK}}^*(m)$ of a local NACK sequence on the subcarrier $m$ based on the subcarrier, performing invert fast Fourier transformation (IFFT) on point $N_{IFFT}$, and solving a modulus square for each IFFT result at a time point $k$ and performing weighted summation based on a weight $b_{iRx}$ of the receiving port $iRx$ to obtain a sum of weighted powers $CIR(k)$ at the time point k, which is expressed as:

$$\text{CIR}(k) = \Sigma_{iRx} b_{iRx} * \left| \underset{N_{IFFT}}{IFFT}\{R(\text{iRx}, m) * x^*_{\text{NACK}}(m)\} \right|^2 ;$$

where $N_{IFFT}$ is an integer of power N of 2 greater than or equal to $N^{RB}_{SC}$ .

In the above equation, the receiving port *iRx* has a weight:

$$b_{iRx} = \begin{cases} 1.0, iRx_{minG} = \underset{iRx}{min}\{G(iRx)\} \\ \dfrac{G(iRx_{minG})}{G(iRx)}, others \end{cases} ,$$

where $iRx_{minG}$ is a receiving port with the minimum gain, *G(iRx)* is a gain at the receiving port *iRx* determined through symbol *l'-1*, $N^{RB}_{SC}$ is a sixth preset value, $k=0,1,...,N_{IFFT}-1$, and $m=0,1,...,N_{IFFT}-1$. The sum of weighted powers *CIR(k)* is also denoted as a cross-correlation result of the received PSFCH signal *R(iRx, m)* and the local NACK sequence $x_{\text{NACK}}$ (*m*), where $x^*_{\text{NACK}}(m)$ is a conjugate of the local NACK sequence $x_{\text{NACK}}(m)$ on the subcarrier *m*.

At operation S304, determining a peak phase and a peak power based on the sum of weighted powers, determining a base power based on the sum of weighted powers and the peak power, and determining a ratio of the peak power to the base power.

In one implementation, the operation S304 may include:

searching for a position maximum value within a time point *k* range from the sum of weighted powers *CIR(k)*, and determining the position maximum value as the peak phase, where $k=0$, $1,...,$ $N_{IFFT}-1$, and $N_{IFFT} \geq max(32, N^{RB}_{SC})$ , $N^{RB}_{SC}$ is a sixth preset value;

searching for a power maximum value within a time point *k* range from the sum of weighted powers *CIR(k)*, and determining the power maximum value as the peak power;

determining the base power based on the sum of weighted powers and the peak power by:

$$P_{seq} = \frac{\sum_k CIR(k) - P_{NACK}}{N_{IFFT}-1} ; \text{ and}$$

determining the ratio of the peak power to the base power by: $Det_P = \frac{P_{NACK}}{P_{seq}}$ ;

where *CIR(k)* is the sum of weighted powers, $Ph_{NACK}$ is the peak phase, $P_{NACK}$ is the peak power, $P_{seq}$ is the base power, and $Det_P$ is the ratio.

At operation S306, determining an output weight of the PSFCH signal based on the peak phase and the ratio, and setting (determining) an output state for the PSFCH signal.

At operation S308, detecting the PSFCH signal based on the output weight and the output state.

In one implementation, the operation S306 may include operations S1 and S2.

At operation S1, under the condition that higher-layer signaling indicates that the PSFCH signal is an NACK sequence or an NA sequence, determining the output weight of the PSFCH signal based on the peak phase, the ratio, a phase threshold of the NA sequence and a phase threshold of the NACK sequence, and setting the output state for the PSFCH signal.

At operation S2, under the condition that higher-layer signaling indicates that the PSFCH signal is an NACK sequence or an ACK sequence, determining the output weight based on the peak phase, the ratio, a power threshold of the NACK sequence, a power threshold of the NA sequence, and a phase threshold of the NACK sequence, and setting the output state for the PSFCH signal.

The operation S1 may include: initializing the output weight *flag* to an initial value, and initializing the output state *flag1* to 0; under the condition that an absolute value abs($Ph_{NACK}$) of the peak phase is greater than or equal to the phase threshold $Th_{ph,NA}$ of the NA sequence , determining the output weight *flag* of the PSFCH signal by: *flag=-b\*c2/c1,* while the output state *flag1* remains unchanged; and under the condition that the ratio is less than or equal to the power threshold of the NA sequence, i.e., $Det_P \leq Th_{P,NA}$, setting the output state *flag1* to 1, and determining the output weight *flag* of the PSFCH signal by: *flag=-b\*c2\*c1;*

$$c1 = \frac{Th_{P,NA}}{Det_P}, \quad c2 = \frac{Ph_{NACK}}{Th_{Ph}}$$

where $b$ is a first preset value, , $Th_{Ph,NA}$ is the phase threshold of the NA sequence, $Th_{P,NA}$ is the power threshold of the NA sequence, $Ph_{NACK}$ is the peak phase, $Det_P$ is the ratio, and $Th_{Ph}$ is the phase threshold of the NACK sequence.

The operation S2 may include: under the condition that an absolute value abs($Ph_{NACK}$) of the peak phase is less than the phase threshold $Th_{Ph}$ of the NACK sequence, initializing the output weight *flag*, and initializing the output state *flag1* to 0; and

keeping the output state *flag1* unchanged if the ratio is greater than the power threshold of the NACK sequence, i.e., $Det_P > Th_P$; where under the condition that the output weight *flag* is equal to an initial value, if an absolute value abs($Ph_{NACK}$) of the peak phase is less than the phase threshold $Th_{Ph,NA}$ of the NA sequence, then *flag=b0\*c2\*c0*; and if the absolute value abs($Ph_{NACK}$) of the peak phase is greater than or equal to the phase threshold $Th_{Ph,NA}$ of the NA sequence, then *flag=b\*c2\*c0*; under the condition that *flag* is not equal to an initial value, if an absolute value abs($Ph_{NACK}$) of the peak phase is less than the phase threshold $Th_{Ph,NA}$ of the NA sequence, then *flag=-flag+b0\*c2\*c0*; and if the absolute value abs($Ph_{NACK}$) of the peak phase is greater than or equal to the phase threshold $Th_{Ph,NA}$ of the NA sequence, then *flag=flag+b\*c2\*c0*; and

if the ratio is less than or equal to the power threshold of the NACK sequence, i.e., $Det_P \leq Th_P$, then *flag1=flag1+1*; under the condition that *flag* is equal to an initial value, if an absolute value abs($Ph_{NACK}$) of the peak phase is less than the phase threshold $Th_{Ph,NA}$ of the NA sequence, then *flag=b1\*c2\*c0*; and if the absolute value abs($Ph_{NACK}$) of the peak phase is greater than or equal to the phase threshold $Th_{Ph,NA}$ of the NA sequence, then *flag=b\*c2\*c0*; and under the condition that *flag* is not equal to an initial value, if an absolute value abs($Ph_{NACK}$) of the peak phase is less than the phase threshold $Th_{Ph,NA}$ of the NA sequence, then *flag=flag+b1\*c2\*c0*; and if the absolute value abs($Ph_{NACK}$) of the peak phase is greater than or equal to the phase threshold $Th_{Ph,NA}$ of the NA sequence, then *flag=flag+b\*c2\*c0*; where $b$ is a first preset value, $b0$ is a second preset value, $b1$ is a third preset value,

$$c0 = \frac{Det_P}{Th_P}, \quad c1 = \frac{Th_{P,NA}}{Det_P}, \quad c2 = \frac{Ph_{NACK}}{Th_{Ph}}$$

, $Th_P$ is the power threshold of the NACK sequence, $Th_{P,NA}$ is the power threshold of the NA sequence, $Ph_{NACK}$ is the peak phase, $Det_P$ is the ratio, and $Th_{Ph}$ is the phase threshold of the NACK sequence.

In this implementation, the operation S308 may include operations S3081 and S3082.

At operation S3081, under the condition that higher-layer signaling indicates that the PSFCH signal is an NACK sequence or an NA sequence, determining that the PSFCH signal is the NACK sequence or the NA sequence based on the output state *flag1* and the output weight *flag*.

At operation S3082, under the condition that higher-layer signaling indicates that the PSFCH signal is an NACK sequence or an ACK sequence, determining that the PSFCH signal is the NACK sequence or the ACK sequence based on the phase threshold $Th_{Ph}$ of the NACK sequence and the output weight *flag*.

Further, the operation S3081 may include: determining a decision threshold *thD* based on the output state *flag1*, which includes, for example, determining whether the output state *flag1* is equal to 2; under the condition that a determination result indicates that the output state is equal to 2, determining that the decision threshold *thD* is a fourth preset value *thl*; and under the condition that the determination result indicates that the output state is not equal to 2, determining that the decision threshold *thD* is a fifth preset value *th2*, where the fourth preset value *th1* and the fifth preset value *th2* are different preset values not equal to each other; determining whether the output weight *flag* is greater than the decision threshold *thD*; under the condition that a determination result indicates that the output weight is greater than the decision threshold, determining that the PSFCH signal is the NACK sequence; and under the condition that the determination result indicates that the output weight is not greater than the decision threshold, determining the PSFCH signal is the NA sequence.

Further, the operation S3082 may include: determining a decision threshold *thD* based on the phase threshold $Th_{Ph}$ of the NACK sequence, which includes, for example, assigning a fourth preset value *th1* to the phase threshold $Th_{Ph}$ of the NACK sequence; determining that the decision threshold *thD* is a fourth preset value *th1*; determining whether the output weight *flag* is greater than the decision threshold *thD*; under the condition that a determination result indicates that the output weight is greater than the decision threshold, determining that the PSFCH signal is the NACK sequence; and under the condition that the determination result indicates that the output weight is not greater than the decision threshold, determining the PSFCH signal is the ACK sequence.

In one implementation, the PSFCH transmits a sequence at a transmitting port 5000 at a power factor $\beta_{\text{PSFCH}}$.

$$x(n) = r_{u,v}^{\alpha,\delta}(n);$$

$$n = 0,1, \ldots, N_{\text{sc}}^{\text{RB}} - 1;$$

$$r_{u,v}^{(\alpha,\delta)}(n) = e^{j\alpha n}\bar{r}_{u,v}(n), \quad 0 \leq n < M_{\text{ZC}},$$

$$\bar{r}_{u,v}(n) = e^{j\phi(n)\pi/4}, \quad 0 \leq n \leq M_{\text{ZC}} - 1;$$

and

$$\alpha_l = \frac{2\pi}{N_{\text{sc}}^{\text{RB}}}\left(\left(m_0 + m_{\text{cs}} + m_{\text{int}} + n_{\text{cs}}\left(n_{\text{s,f}}^{\mu}, l + l'\right)\right) \bmod N_{\text{sc}}^{\text{RB}}\right);$$

where each of $m_0$, $l$, $l'$, $u$, $v$ and $m_{\text{int}}$ and the like can be obtained by signaling, while only $m_{\text{cs}}$ used for calculating $\alpha_l$ is correlated with ACK/NACK, resulting in the ACK and NACK sequences $x_{ACK}(n)$ and $x_{NACK}(n)$, respectively.

The R16 NR protocol defines two PSFCH transmission methods: in a first method, for NACK sequence $x_{NACK}(n)$, $m_{\text{cs}}$ = 0, and for ACK sequence $x_{ACK}(n)$, $m_{\text{cs}}$ = 6, and since $N_{SC}^{RB} = 12$, a difference of the NACK sequence and the ACK sequence is $\pi$; and in a second method, for NACK sequence $x_{NACK}(n)$, $m_{\text{cs}}$ = 0, while the ACK sequence is not sent and marked as an NA sequence. A receiving UE acquires the current PSFCH transmission method through signaling.

The PSFCH is fixed on symbols $l'$-1 and $l'$ for transmission, where the same information is transmitted over the two symbols, the symbol $l'$-1 is used only for automatic gain control (AGC) at a receiving end, and the symbol $l'$ is used only for ACK/NACK information detection on the PSFCH.

Assume that the frequency domain PSFCH signal on the subcarrier $m$ received via symbol $l'$ at port $iRx$ is:

$$R(iRx, m) = \begin{cases} G(iRx) * \left(H(m) * x(m) + N_0(m)\right), & \text{with an ACK or NACK sequence} \\ G(iRx) * N_0(m), & \text{no sequence transmitted, marked as NA sequence.} \end{cases}$$

In the above equation, $m = n_0 + n \in \{PSFCH\}$ n=0,1,..., $N_{\text{SC}}^{\text{RB}}$-1, $n_0$ is a value determined by higher-layer signaling, $G(iRx)$ is a gain at the receiving port $iRx$ calculated through symbol $l'$-1, and $N_0(m)$ is AWGN.

No matter which method is used for PSFCH transmission, the received signal is desired to be detected in a known sequence detection method, typically with the known NACK sequence $x_{NACK}(n)$. One of the conventional methods for detecting the known NACK sequence $x_{NACK}(n)$ involves using a method of local cross-correlation to improve an SNR of a detection cost function.

$$Ph_{NACK} = \begin{cases} p, p < \frac{N_{IFFT}}{2} \\ N_{IFFT} - p, others \end{cases}, \quad p = \underset{k}{PeakPos}\{\text{CIR}(k)\}, k = 0,1, \ldots, N_{\text{IFFT}} - 1.$$

In the above equation, $\underset{k}{PeakPos}\{\text{CIR}(k)\}$ represents searching for a maximum value of $CIR(k)$ within the range of $k$ and outputting a corresponding $k$ value.

$$CIR(k) = \sum_{iRx} b_{iRx} * \left|\underset{N_{IFFT}}{IFFT}\{R(iRx, m) * x_{NACK}^*(m)\}\right|^2$$

, k=0,1,..., $N_{\text{IFFT}}$ - 1, and m=0,1,..., $N_{\text{IFFT}}$ - 1, which

$$R(iRx, m) = \begin{cases} R(iRx, m), m < N_{SC}^{RB} \\ 0, others \end{cases}$$

is a cross-correlation result of the received frequency domain sequence and the local known NACK sequence $x_{NACK}(m)$, where

$$b_{iRx} = \begin{cases} 1.0, iRx_{minG} = \underset{iRx}{min}\{G(iRx)\} \\ \frac{G(iRx_{minG})}{G(iRx)}, others \end{cases}$$

, and $N_{\text{IFFT}}$ is an integer of power N of 2 greater than or equal to $N_{SC}^{RB}$.

When the first PSFCH transmission method is adopted, i.e., when an ACK or NACK sequence is transmitted, detection of the ACK or NACK sequence is complemented by comparing $Ph_{NACK}$ with a threshold.

$$\text{Det} = \begin{cases} \text{NACK}, 0 \leq Ph_{NACK} < Th_{Ph}, \\ \text{ACK,others} \end{cases} Th_{Ph} = \frac{N_{IFFT}}{N_{SC}^{RB}} * 6.$$

When the second PSFCH transmission method is adopted, i.e., when an NACK sequence is transmitted or no sequence is transmitted, it is still suitable after modifying the ACK sequence into the NA sequence based on the sequence detection result. However, when the SNR of the received signal is relatively low, this detection method may result in a relatively high probability of mistaking the transmitted NACK sequence as the NA sequence or the NA sequence as the NACK sequence due to high randomness of a CIR peak after correlation between a local sequence and a received AWGN, while in the conventional method, an absolute threshold of the CIR peak relative to a background noise is introduced to reduce the error detection probability, and therefore, a new cost function is introduced.

$$Det_P = \frac{P_{NACK}}{P_{seq}};$$

$$P_{NACK} = \underset{k}{PeakPower}\{\text{CIR}(k)\}, k = 0,1,\ldots,N_{\text{IFFT}} - 1;$$

$$P_{seq} = \frac{\sum_k CIR(k) - P_{NACK}}{N_{IFFT} - 1}.$$

In the above equations, $\underset{k}{PeakPos}\{\text{CIR}(\text{k})\}$ represents searching for and outputting a maximum value of the function *CIR(k)* within the range of *k*, $P_{NACK}$ represents a peak power of the cross-correlation result *CIR(k)*, $P_{seq}$ represents a base power obtained by removing the peak power $P_{NACK}$ from the cross-correlation result *CIR(k)*. A new decision is introduced, which is expressed as:

$$\text{Det} = \begin{cases} \text{NACK}, 0 \leq Ph_{NACK} < Th_{Ph} \text{ and } Det_p > Th_p, \\ \text{NA, others} \end{cases},$$

$$Th_{Ph} = \frac{N_{IFFT}}{N_{SC}^{RB}} * 6, Th_P = 4.$$

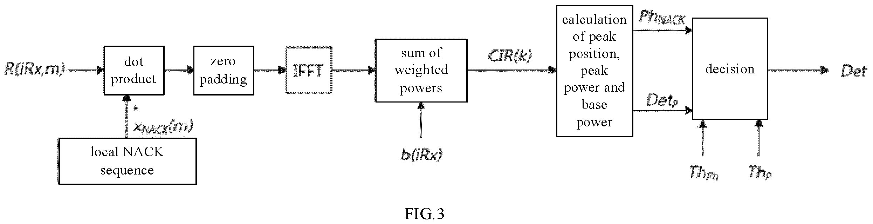

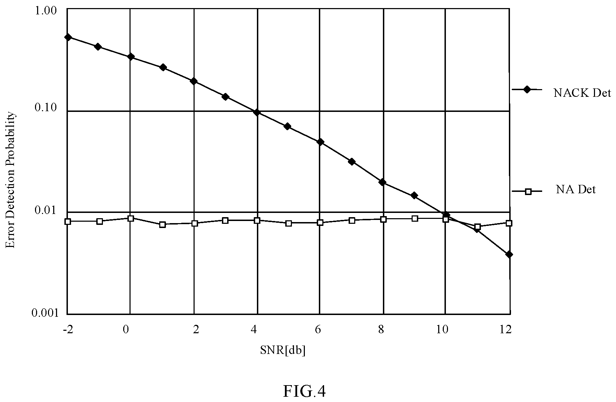

In the above equations, $Th_P$=4 is an empirical value. FIG. 3 is a schematic diagram of a PSFCH reception detection system in the existing art. As shown in FIG. 3, to reduce the error detection probabilities of both the NACK sequence and the NA sequence to less than 1%, two thresholds $Th_{Ph}$ and $Th_P$ in the new decision are desired to be adjusted, to obtain a simulation result of a next NR Sidelink typical channel under the thresholds. FIG. 4 is a schematic diagram of error detection performance verification for NACK and NA sequences in the existing art. As shown in FIG. 4, the performance still needs to be improved. As shown in FIG. 3, when the PSFCH detection system adopts the second PSFCH transmission method, i.e., when an NACK or NA sequence is transmitted, a root cause of the poor performance is that the randomness in both position and magnitude of the CIR peak of the AWGN sequence under a low SNR greatly interferes with the above decision.

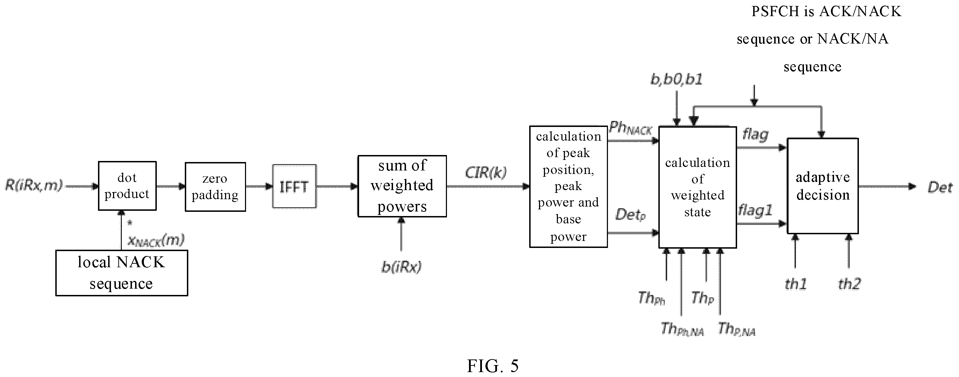

In view of the above problems, the present application enables an NR Sidelink receiving end to receive PSFCH well without notably increasing the complexity, and, in particular, provides greatly improved receiving detection performance when the PSFCH transmits the NACK/NA sequence. FIG. 5 is a schematic diagram of a PSFCH detection system according to the present application. As shown in FIG. 5, the detection process mainly includes: performing a dot product operation, zero padding, IFFT and summation of weighted powers on the received PSFCH signal and the local NACK sequence, to obtain a sum of weighted powers *CIR(k),* from which a peak phase, a peak power, and a base power are calculated through the above methods, which are not described in detail here.

The process further includes weighted state calculation, which may include: when the PSFCH transmission sequence is an ACK/NACK sequence: directly outputting a phase cost function output $Ph_{NACK}$ to a weight, while outputting a state *flag1*.

The weighted state calculation may further include: when the PSFCH transmission sequence is a NACK/NA sequence: comparing the phase cost function output $Ph_{NACK}$ and the power cost function output $Det_P$ with a phase threshold $Th_{Ph}$ and a power threshold $Th_P$ corresponding to the NACK sequence, and a phase threshold $Th_{Ph,NA}$ and a power threshold $Th_{P,NA}$ corresponding to the NA sequence, respectively, to calculate the output weights *flag* of $Ph_{NACK}$ and $Det_P$ in one or two states, where the weights are calculated with different weight coefficients *b, b0* and *b1* in different states, and phase and power confidences in different states are introduced in the weight calculation, while outputting a state *flag1*.

The process further includes adaptive decision, which may include: when the PSFCH transmission sequence is an ACK or NACK sequence: comparing the output weight *flag* with *th1,* to obtain the determination that the currently received PSFCH signal is ACK or NACK; and when the PSFCH transmission sequence is a NACK or NA sequence: based on the output state *flag1*, selecting a fourth preset value *th1* or a fifth preset value *th2* as a threshold to be compared with the output weight *flag,* so as to obtain the determination that the currently received PSFCH signal is NACK or NA.

As shown in FIG. 5, the phase cost function output $Ph_{NACK}$ and the power cost function output $Det_P$ of the received PSFCH signal are obtained in the above methods, where $Ph_{NACK}$ and $Det_P$ are calculated in the same methods as those described above.

When the receiving end obtains a currently received PSFCH signal containing an NACK or NA sequence from the higher-layer signaling, outputs *flag* and *flag1* are obtained in the weighted state calculation module by the operations of:

1, inputting a peak phase $Ph_{NACK}$ and a ratio $Det_P$, a phase threshold $Th_{Ph}$ and a power threshold $Th_P$ corresponding to an NACK state, a phase threshold $Th_{Ph,NA}$ and a power threshold $Th_{P,NA}$ corresponding to an NA state, and weight coefficients *b, b0* and *b1*;

2, resetting the output weight and the output state to: output weight *flag* = initial value; and output state *flag1*=0;

3, calculating phase and power confidences of the NACK state: $c0 = \dfrac{Det_P}{Th_P}$ ; $c2 = \dfrac{\frac{Ph_{NACK}}{Th_{Ph}}}{}$

4, calculating a power confidence of the NA state: $c1 = \dfrac{Th_{P,NA}}{Det_P}$

5, calculating the output weight and setting the output state in a first method expressed as:

$$if\ fabs(Ph_{NACK}) \geq Th_{Ph,NA},\ or\ Det_P \leq Th_{P,NA}$$

$$\{$$

$$if\ fabs(Ph_{NACK}) \geq Th_{Ph,NA}$$

$$\{$$

$$flag=-b*c2/c1;$$

$$\}$$

$$else$$

$$\{$$

$$flag1=1;$$

$$flag=-b*c2*c1;$$

$$\}$$

$$\}$$

6, calculating the output weight and setting the output state in a second method expressed as:

$$if\ abs(Ph_{NACK}) < Th_{Ph}$$

```
{
    if Det_P > Th_P
    {
        if flag== initial value
        {
            if fabs(Ph_NACK) < Th_{Ph,NA}
                flag=b0*c2*c0;
            else
                flag=b*c2*c0;
        }
        else
        {
            if fabs(Ph_NACK) < Th_{Ph,NA}
                flag=flag+b0*c2*c0;
            else
                flag=flag+b*c2*c0;
        }
    }
    else

    {
        flag1=flag1+1;
        if flag== initial value
        {
            if fabs(Ph_NACK) < Th_{Ph,NA}
                flag=b1*c2*c0;
            else
                flag=b*c2*c0;
        }
        else
        {
            if fabs(Ph_NACK) < Th_{Ph,NA}
                flag=flag+b1*c2*c0;
            else
                flag=flag+b*c2*c0;

        }
    }
}
```

7, adaptive decision, including:

when the receiving end obtains a currently received PSFCH signal containing an NACK or NA sequence from the higher-layer signaling, inputting the output weight *flag*, the output state *flag1*, the fourth preset value *th1* and the fifth preset value *th2* for adaptive decision, and obtaining a decision result *Det* by:

$$Det = \begin{cases} NACK, flag > thD \\ NA, others \end{cases}, \quad thD = \begin{cases} th1, flag1 = 2 \\ th2, others \end{cases},$$

when the receiving end obtains a currently received PSFCH signal containing an ACK or NACK sequence from the higher-layer signaling, as shown in FIG. 5, setting the output weight $flag=Ph_{NACK}$ and the output state $flag1=3$ through calculation; and obtaining the decision result:

$$\mathrm{Det} = \begin{cases} \mathrm{NACK}, 0 \le flag < thD \\ \mathrm{ACK, others} \end{cases}, \quad thD = th1 = Th_{Ph}.$$

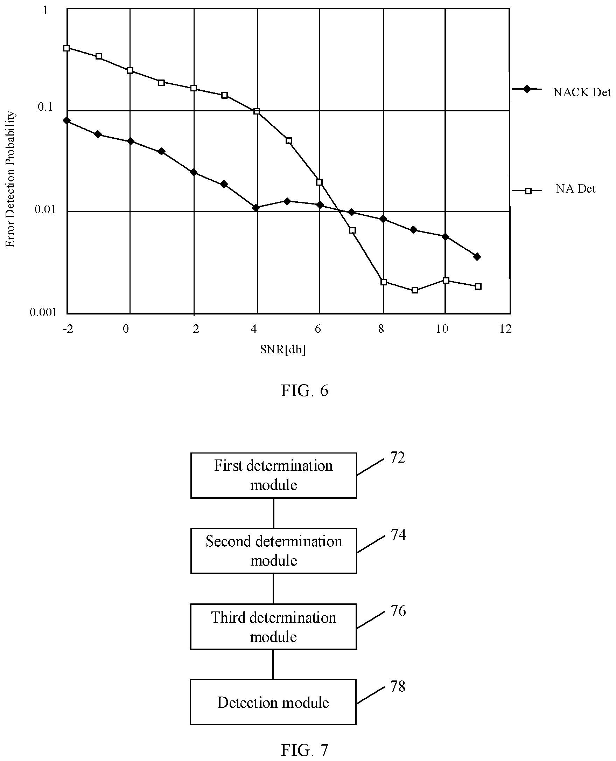

In an NR Sidelink communication system, when the PSFCH signal is an NACK or NA sequence, using the PSFCH detection scheme shown in FIG. 5, and setting empirical values required for determining the output weight, the output state, and the decision result $Det$: $N_{IFFT}$ =32, $th1$=1000, $th2$=100, $b$=1000, $b0$=2000, $b1$=4000, $Th_{Ph,NA} = \dfrac{288*N_{IFFT}}{4096}$ and $Th_{P,NA}$ = 5.5. FIG. 6 is a schematic diagram of error detection performance verification for NACK and NA sequences according to the present application. As shown in FIG. 6, the SNR corresponding to an error detection probability =1% in the NACK and NA sequence is 6.7dB. In contrast, the SNR corresponding to an error detection probability =1% in the NACK and NA sequence is 10dB in the conventional detection method. As shown in FIG. 4, the SNR requirement in the new detection method is reduced by 3.3dB compared with the method in the existing art.

The present application further provides a PSFCH signal detection device. FIG. 7 is a block diagram of a PSFCH signal detection device according to the present application. As shown in FIG. 7, the device includes: a first determination module 72 configured to determine a sum of weighted powers of a received PSFCH signal and a local NACK sequence; a second determination module 74 configured to determine a peak phase and a peak power based on the sum of weighted powers, determine a base power based on the sum of weighted powers and the peak power, and determine a ratio of the peak power to the base power; a third determination module 76 configured to determine an output weight of the PSFCH signal based on the peak phase and the ratio, and set an output state for the PSFCH signal; and a detection module 78 configured to detect the PSFCH signal based on the output weight and the output state.

In one implementation, the third determination module 76 includes: a first determination submodule configured to under the condition that higher-layer signaling indicates that the PSFCH signal is an NACK sequence or an NA sequence, determine the output weight of the PSFCH signal based on the peak phase, the ratio, a phase threshold of the NA sequence and a phase threshold of the NACK sequence, and set the output state for the PSFCH signal; and a second determination submodule configured to under the condition that higher-layer signaling indicates that the PSFCH signal is an NACK sequence or an ACK sequence, determine the output weight of the PSFCH signal based on the peak phase, the ratio, a power threshold of the NACK sequence, a power threshold of the NA sequence, and a phase threshold of the NACK sequence, and set the output state for the PSFCH signal.

In one implementation, the first determination submodule is further configured to initialize the output weight $flag$, and initialize the output state $flag1$ to 0;

under the condition that an absolute value of the peak phase is greater than or equal to the phase threshold of the NA sequence, i.e., $abs(Ph_{NACK}) \ge Th_{Ph,NA}$, determine the output weight $flag$ by: $flag=-b*c2/c1$, while the output state $flag1$ remains unchanged; and

under the condition that the ratio is less than or equal to the power threshold of the NA sequence, i.e., $Det_P \le Th_{P,NA}$, set the output state $flag1$ to 1, and determine the output weight $flag$ by: $flag=-b*c2*c1$;

$$c1 = \frac{Th_{P,NA}}{Det_P}, \quad c2 = \frac{Ph_{NACK}}{Th_{Ph}}$$

where $b$ is a first preset value, , $Th_{Ph,NA}$ is the phase threshold of the NA sequence, $Th_{P,NA}$ is the power threshold of the NA sequence, $Ph_{NACK}$ is the peak phase, $Det_P$ is the ratio, and $Th_{Ph}$ is the phase threshold of the NACK sequence.

In one implementation, the second determination submodule is further configured to, under the condition that an absolute value of the peak phase is less than the phase threshold of the NACK sequence, initialize the output weight $flag$, and initialize the output state $flag1$ to 0; and

keep the output state $flag1$ unchanged if the ratio is greater than the power threshold of the NACK sequence, i.e., $Det_P > Th_P$; where

under the condition that the output weight $flag$ is equal to an initial value, if an absolute value of the peak phase is less than the phase threshold of the NA sequence, then $flag=b0*c2*c0$; and if the absolute value of the peak phase is greater than or equal to the phase threshold of the NA sequence, then $flag=b*c2 *c0$;

under the condition that $flag$ is not equal to an initial value, if an absolute value of the peak phase is less than the phase threshold of the NA sequence, then $flag=flag+b0*c2*c0$; and if the absolute value of the peak phase is greater than or equal to the phase threshold of the NA sequence, then *flag=flag+b\*c2 \*c0*;

if the ratio is less than or equal to the power threshold of the NACK sequence, i.e., $Det_P \leq Th_P$. then*flag1=flag1+1*; under the condition that *flag* is equal to an initial value, if an absolute value of the peak phase is less than the phase threshold of the NA sequence, then *flag=b1\*c2\*c0*; and if the absolute value of the peak phase is greater than or equal to the phase threshold of the NA sequence, then *flag=b\*c2\*c0*; and

under the condition that *flag* is not equal to an initial value, if an absolute value of the peak phase is less than the phase threshold of the NA sequence, then *flag=flag+b1\*c2\*c0*; and if the absolute value of the peak phase is greater than or equal to the phase threshold of the NA sequence, then *flag=flag+b\*c2 \*c0*;

where *b* is a first preset value, *b0* is a second preset value, *b1* is a third preset value,

$$c0 = \frac{Det_P}{Th_P}, \quad c1 = \frac{Th_{P,NA}}{Det_P}, \quad c2 = \frac{Ph_{NACK}}{Th_{Ph}}$$

, $Th_P$ is the power threshold of the NACK sequence, $Th_{P,NA}$ is the power threshold of the NA sequence, $Ph_{NACK}$ is the peak phase, $Det_P$ is the ratio, and $Th_{Ph}$ is the phase threshold of the NACK sequence.

In one implementation, the detection module 78 includes: a judgment submodule configured to under the condition that higher-layer signaling indicates that the PSFCH signal is an NACK sequence or an NA sequence, determine that the PSFCH signal is the NACK sequence or the NA sequence based on the output state *flag1* and the output weight *flag*; and a determination submodule configured to under the condition that higher-layer signaling indicates that the PSFCH signal is an NACK sequence or an ACK sequence, determine that the PSFCH signal is the NACK sequence or the ACK sequence based on the phase threshold $Th_{Ph}$ of the NACK sequence and the output weight *flag*.

In one implementation, the judgment submodule includes: a first determination unit configured to determine *thD* from the output state *flag1*; a first judgment unit configured to determine whether the output weight *flag* is greater than the decision threshold *thD;* a second determination unit configured to under the condition that a determination result indicates that the output weight is greater than the decision threshold, determine that the PSFCH signal is the NACK sequence; and under the condition that the determination result indicates that the output weight is not greater than the decision threshold, determine that the PSFCH signal is the NA sequence.

In one implementation, the first determination unit is further configured to determine whether the output state *flag1* is equal to 2; under the condition that a determination result indicates that the output state is equal to 2, determine that the decision threshold *thD* is a fourth preset value *th1*; and under the condition that the determination result indicates that the output state is not equal to 2, determine that the decision threshold *thD* is a fifth preset value *th2*. The fourth preset value *th1* and the fifth preset value *th2* are different preset values not equal to each other.

In one implementation, the determination submodule includes: a third determination unit configured to determine a decision threshold *thD* based on the phase threshold $Th_{Ph}$ of the NACK sequence; a second judgment unit configured to determine whether the output weight *flag* is greater than the decision threshold *thD;* a fourth determination unit configured to, under the condition that a determination result indicates that the output weight is greater than the decision threshold, determine that the PSFCH signal is the NACK sequence; and under the condition that the determination result indicates that the output weight is not greater than the decision threshold, determine that the PSFCH signal is the ACK sequence.

In one implementation, the third determination unit is further configured to assign a fourth preset value *th1* to the phase threshold $Th_{Ph}$ of the NACK sequence; and determine that the decision threshold *thD* is the fourth preset value *th1*.

In one implementation, the first determination module 72 is further configured to determine the sum of weighted powers of the received PSFCH signal and the local NACK sequence by:

$$CIR(k) = \Sigma_{iRx} b_{iRx} * \left| \underset{N_{IFFT}}{IFFT} \{ R(iRx, m) * x^*_{NACK}(m) \} \right|^2;$$

$$b_{iRx} = \begin{cases} 1.0, iRx_{minG} = \underset{iRx}{min} \{ G(iRx) \} \\ \frac{G(iRx_{minG})}{G(iRx)}, others \end{cases}, \quad N_{IFFT} \geq \max(32, N_{SC}^{RB});$$

where *CIR(k)* is the sum of weighted powers at a time point *k*, *R(iRx,m)* is a PSFCH signal received at a receiving port *iRx* on a subcarrier *m*, $x^*_{NACK}(m)$ is a conjugate of the local NACK sequence on the subcarrier *m, iRx_{minG}* is a receiving port with the minimum gain, *G(iRx)* is a gain at the receiving port *iRx* determined through symbol *l'-l*, and $N_{SC}^{RB}$ is a sixth preset value, *k = 0,1,.. ., N_{IFFT} - 1*, and *m = 0,1,...,N_{IFFT} - 1*.

In one implementation, the second determination module 74 is further configured to search for a position maximum value within a time point k range from the sum of weighted powers *CIR(k)*, and determine the position maximum value as the peak phase, where k = 0,1,...,$N_{\text{IFFT}}$ - 1, $N_{\text{IFFT}} \geq \max\left(32, N_{\text{SC}}^{\text{RB}}\right)$, and $N_{\text{SC}}^{\text{RB}}$ is a sixth preset value; search for a power maximum value within a time point k range from the sum of weighted powers *CIR(k)*, and determine the power maximum value as the peak power; determine the base power based on the sum of weighted powers and the peak power by:

$$P_{seq} = \frac{\sum_k CIR(k) - P_{NACK}}{N_{IFFT} - 1};$$

and

determine the ratio of the peak power to the base power by: $Det_P = \frac{P_{NACK}}{P_{seq}}$, where *CIR(k)* is the sum of weighted powers, $Ph_{NACK}$ is the peak phase, $P_{\text{NACK}}$ is the peak power, $P_{seq}$ is the base power, and $Det_P$ is the ratio.

The present application further provides a computer-readable storage medium having a computer program stored thereon, where the computer program, when executed by a processor, causes the processor to implement operations of any method described above.

In an exemplary implementation, the computer-readable storage medium may include, but is not limited to: a U disk, a read-only memory (ROM), a random access memory (RAM), a mobile hard disk, a magnetic or optical disk, or any other medium that can store computer programs.

The present application further provides an electronic device, including a memory and a processor, where the memory has a computer program stored thereon, and the processor is configured to execute the computer program to implement operations of any method as described above.

In an exemplary implementation, the electronic device may further include a transmission device and an input/output device. The transmission device is connected to the processor, and the input/output device is connected to the processor.

For examples of the device implementation, reference may be made to the examples described in the above and exemplary implementations, which are not repeated here.

According to the present application, by determining a sum of weighted powers of a received PSFCH signal and a local NACK sequence; determining a peak phase and a peak power based on the sum of weighted powers, determining a base power based on the sum of weighted powers and the peak power, and determining a ratio of the peak power to the base power; determining an output weight of the PSFCH signal based on the peak phase and the ratio, and setting an output state; and detecting the PSFCH signal based on the output weight and the output state, the problem of the high error detection probability of the PSFCH signal in the case of a relatively low SNR of the received signal in the existing art can be solved, and by detecting the received PSFCH signal based on the output weight and output state determined from the peak phase and the ratio, the error detection probability of the PSFCH signal is reduced.

Obviously, a person skilled in the art will understand that the above modules and operations of the present application may be implemented by a universal computing device, may be integrated in a single computing device or distributed over a network that consists of a plurality of computing devices. They can be implemented by executable program codes of the computing device so that they can be stored in a storage device and executed by the computing device, and, in some cases, the shown or described operations may be performed out of the order shown herein, or they may be made into different integrated circuit modules respectively, or a plurality of modules or operations therein may be made into a single integrated circuit module to be implemented. In this way, the present application is not restricted to any particular hardware and software combination.

The above are merely exemplary implementations of the present application, which are not intended to restrict the present disclosure. For those skilled in the art, the present application may have various changes and variations. Any amendments, equivalent substitutions, improvements, etc. within the principle of the present application are included in the scope of protection defined by the appended claims of the present application.

## Claims

1. A physical sidelink feedback channel (PSFCH) signal detection method, comprising:

   determining a sum of weighted powers of a received PSFCH signal and a local NACK sequence;
   determining a peak phase and a peak power based on the sum of weighted powers, determining a base power based on the sum of weighted powers and the peak power, and determining a ratio of the peak power to the base power;

determining an output weight of the PSFCH signal based on the peak phase and the ratio, and setting an output state for the PSFCH signal; and
detecting the PSFCH signal based on the output weight and the output state.

2. The method according to claim 1, wherein the operation of determining the output weight of the PSFCH signal based on the peak phase and the ratio, and setting the output state for the PSFCH signal comprises:

under a condition that higher-layer signaling indicates that the PSFCH signal is an NACK sequence or an NA sequence, determining the output weight based on the peak phase, the ratio, a phase threshold of the NA sequence and a phase threshold of the NACK sequence, and setting the output state for the PSFCH signal; and
under a condition that higher-layer signaling indicates that the PSFCH signal is an NACK sequence or an ACK sequence, determining the output weight of the PSFCH signal based on the peak phase, the ratio, a power threshold of the NACK sequence, a power threshold of the NA sequence, and a phase threshold of the NACK sequence, and setting the output state for the PSFCH signal.

3. The method according to claim 2, wherein the operation of determining the output weight based on the peak phase, the ratio, the phase threshold of the NA sequence and the phase threshold of the NACK sequence, and setting the output state for the PSFCH signal comprises:

initializing the output weight *flag,* and initializing the output state *flag1* to 0;
under a condition that an absolute value of the peak phase is greater than or equal to the phase threshold of the NA sequence, determining the output weight *flag* by: *flag=-b*c2/c1,* while the output state *flag1* remains unchanged; and
under a condition that the ratio is less than or equal to the power threshold of the NA sequence, setting the output state *flag1* to 1, and determining the output weight *flag* by: *flag=-b*c2*c1*;

$$c1 = \frac{Th_{P,NA}}{Det_P}, \quad c2 = \frac{Ph_{NACK}}{Th_{Ph}}$$

wherein *b* is a first preset value, , $Th_{Ph,NA}$ is the phase threshold of the NA sequence, $Th_{P,NA}$ is the power threshold of the NA sequence, $Ph_{NACK}$ is the peak phase, $Det_P$ is the ratio, and $Th_{Ph}$ is the phase threshold of the NACK sequence.

4. The method according to claim 2, wherein the operation of determining the output weight of the PSFCH signal based on the peak phase, the ratio, a power threshold of the NACK sequence, the power threshold of the NA sequence, and the phase threshold of the NACK sequence, and setting the output state for the PSFCH signal comprises:

under a condition that an absolute value of the peak phase is less than the phase threshold of the NACK sequence, initializing the output weight *flag,* and initializing the output state *flag1* to 0; and
keeping the output state *flag1* unchanged if the ratio is greater than the power threshold of the NACK sequence; wherein
under a condition that the output weight *flag* is equal to an initial value, if an absolute value of the peak phase is less than the phase threshold of the NA sequence, then *flag=b0*c2*c0*; and if the absolute value of the peak phase is greater than or equal to the phase threshold of the NA sequence, then *flag=b*c2*c0*;
under a condition that the output weight *flag* is not equal to an initial value, if an absolute value of the peak phase is less than the phase threshold of the NA sequence, then *flag=flag+b0*c2*c0*; and if the absolute value of the peak phase is greater than or equal to the phase threshold of the NA sequence, then *flag=flag+b*c2*c0*;
if the ratio is less than or equal to the power threshold of the NACK sequence, then *flag1=flag1+1*;
under a condition that the output weight *flag* is equal to an initial value, if an absolute value of the peak phase is less than the phase threshold of the NA sequence, then *flag=b1*c2*c0*; and if the absolute value of the peak phase is greater than or equal to the phase threshold of the NA sequence, then *flag=b*c2*c0*; and
under a condition that the output weight *flag* is not equal to an initial value, if an absolute value of the peak phase is less than the phase threshold of the NA sequence, then *flag=flag+b1*c2*c0*; and if the absolute value of the peak phase is greater than or equal to the phase threshold of the NA sequence, then *flag=flag+b*c2*c0*;
wherein *b* is a first preset value, *b0* is a second preset value, *b1* is a third preset value,

$$c0 = \frac{Det_P}{Th_P}, \quad c1 = \frac{Th_{P,NA}}{Det_P}, \quad c2 = \frac{Ph_{NACK}}{Th_{Ph}}$$

, $Th_P$ is the power threshold of the NACK sequence, $Th_{P,NA}$ is the power threshold of the NA sequence, $Ph_{NACK}$ is the peak phase, $Det_P$ is the ratio, and $Th_{Ph}$ is the phase threshold of the NACK sequence.

5. The method according to claim 1, wherein the operation of detecting the PSFCH signal based on the output weight and the output state comprises:

   under a condition that higher-layer signaling indicates that the PSFCH signal is an NACK sequence or an NA sequence, determining that the PSFCH signal is the NACK sequence or the NA sequence based on the output state *flag1* and the output weight *flag*; and
   under a condition that higher-layer signaling indicates that the PSFCH signal is an NACK sequence or an ACK sequence, determining that the PSFCH signal is the NACK sequence or the ACK sequence based on the phase threshold $Th_{Ph}$ of the NACK sequence and the output weight *flag*.

6. The method according to claim 5, wherein the operation of determining that the PSFCH signal is the NACK sequence or the NA sequence based on the output state *flag1* and the output weight *flag* comprises:

   determining a decision threshold *thD* based on the output state *flag1*;
   determining whether the output weight *flag* is greater than the decision threshold *thD*;
   under a condition that a determination result indicates that the output weight is greater than the decision threshold, determining that the PSFCH signal is the NACK sequence; and
   under a condition that the determination result indicates that the output weight is not greater than the decision threshold, determining that the PSFCH signal is the NA sequence.

7. The method according to claim 6, wherein the operation of determining the decision threshold *thD* based on the output state *flag1* comprises:

   determining whether the output state *flag1* is equal to 2;
   under a condition that a determination result indicates that the output state is equal to 2, determining that the decision threshold *thD* is a fourth preset value *thl*; and
   under a condition that the determination result indicates that the output state is not equal to 2, determining that the decision threshold *thD* is a fifth preset value *th2*, wherein the fourth preset value *th1* is not equal to the fifth preset value *th2*.

8. The method according to claim 5, wherein the operation of determining that the PSFCH signal is the NACK sequence or the ACK sequence based on the phase threshold $Th_{Ph}$ of the NACK sequence and the output weight *flag* comprises:

   determining a decision threshold *thD* based on the phase threshold $Th_{Ph}$ of the NACK sequence;
   determining whether the output weight *flag* is greater than the decision threshold *thD*;
   under a condition that a determination result indicates that the output weight is greater than the decision threshold, determining that the PSFCH signal is the NACK sequence; and
   under a condition that the determination result indicates that the output weight is not greater than the decision threshold, determining that the PSFCH signal is the ACK sequence.

9. The method according to claim 8, wherein the operation of determining the decision threshold *thD* based on the phase threshold $Th_{Ph}$ of the NACK sequence comprises:

   assigning a fourth preset value *th1* to the phase threshold of the NACK sequence $Th_{Ph}$; and
   determining that the decision threshold *thD* is the fourth preset value *th1*.

10. The method according to any one of claims 1 to 9, wherein the method further comprises:

   determining the sum of weighted powers of the received PSFCH signal and the local NACK sequence by:

$$\mathrm{CIR}(k) = \Sigma_{iRx} b_{iRx} * \left| IFFT_{N_{IFFT}}\{R(\mathrm{iRx}, m) * \mathrm{x}^{*}_{\mathrm{NACK}}(m)\} \right|^{2};$$

$$b_{\mathrm{iRx}} = \begin{cases} 1.0, \mathrm{iRx}_{\mathrm{minG}} = min_{\mathrm{iRx}}\{G(\mathrm{iRx})\} \\ \frac{G(\mathrm{iRx}_{\mathrm{minG}})}{G(\mathrm{iRx})}, \mathrm{others} \end{cases}, \quad N_{\mathrm{IFFT}} \geq \max\left(32, N_{\mathrm{SC}}^{\mathrm{RB}}\right);$$

wherein *CIR(k)* is the sum of weighted powers at a time point *k, R(iRx,m)* is a PSFCH signal received at a receiving port *iRx* on a subcarrier *m,* $x^*_{\text{NACK}}(m)$ is a conjugate of the local NACK sequence on the subcarrier *m, iRx$_{minG}$* is a receiving port with the minimum gain, *G(iRx)* is a gain determined at the receiving port *iRx,* and $N^{\text{RB}}_{\text{SC}}$ is a sixth preset value, *k* = 0,1,..., $N_{\text{IFFT}}$ - 1, and *m* = 0,1,...,$N_{\text{IFFT}}$ - 1.

11. The method according to any one of claims 1 to 9, wherein the operation of determining the peak phase and the peak power based on the sum of weighted powers, determining the base power based on the sum of weighted powers and the peak power, and determining the ratio of the peak power to the base power comprises:

searching for a position maximum value within a time point *k* range, from the sum of weighted powers *CIR(k),* and determining the position maximum value as the peak phase, wherein *k* = 0,1,..., $N_{\text{IFFT}}$ - 1,

$$N_{\text{IFFT}} \geq \max\left(32, N^{\text{RB}}_{\text{SC}}\right)$$

, and $N^{\text{RB}}_{\text{SC}}$ is a sixth preset value;
searching for a power maximum value within the time point k range from the sum of weighted powers *CIR(k),* and determining the power maximum value as the peak power;
determining the base power based on the sum of weighted powers and the peak power by:

$$P_{seq} = \frac{\sum_k CIR(k) - P_{NACK}}{N_{IFFT} - 1};$$

and

$$Det_P = \frac{P_{NACK}}{P_{seq}}$$

determining the ratio of the peak power to the base power by:
wherein $P_{NACK}$ is the peak power, $P_{seq}$ is the base power, and $Det_P$ is the ratio.

12. A physical sidelink feedback channel (PSFCH) signal detection device, wherein the device comprises:

a first determination module configured to determine a sum of weighted powers of a received PSFCH signal and a local NACK sequence;
a second determination module configured to determine a peak phase and a peak power based on the sum of weighted powers, determine a base power based on the sum of weighted powers and the peak power, and determine a ratio of the peak power to the base power;
a third determination module configured to determine an output weight of the PSFCH signal based on the peak phase and the ratio, and set an output state for the PSFCH signal; and
a detection module configured to detect the PSFCH signal based on the output weight and the output state.

13. A computer-readable storage medium having a computer program stored thereon, wherein the computer program, when executed by a processor, causes the processor to implement the method according to any one of claims 1 to 11.

14. An electronic device, comprising a memory and a processor, wherein the memory has a computer program stored thereon, and the processor is configured to execute the computer program to implement the method according to any one of claims 1 to 11.

I/O device 108

Transmission
device
106

Processor 102

Memory
104

FIG. 1

Determine a sum of weighted powers of a received PSFCH
signal and a local NACK sequence

S302

Determine a peak phase and a ratio based on the sum of
weighted powers, where the ratio is a ratio of the peak power
to the base power

S304

Determine an output weight based on the peak phase and the
ratio, and determine an output state

S306

Detect the PSFCH signal based on the output weight and the
output state

S308

FIG.2

FIG.3

FIG.4

FIG. 5

FIG. 6

FIG. 7

# EP 4 542 895 A1

## INTERNATIONAL SEARCH REPORT

| International application No. |
| --- |
| **PCT/CN2023/101715** |

### A. CLASSIFICATION OF SUBJECT MATTER

H04L 1/00(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, CNKI, DWPI, ENTXT, 3GPP: 比值, 物理侧信道, 反馈信道, 功率, 波峰, 峰值, 极值, 上限, 最大值, 监测, 检测, 加权, 权值, 输出, 状态, 误, 误检, 相位, ratio, Physical Side Channel, Feedback Channel, PSFCH, power, peak, extreme, upper, max, monitor, detect, weight, output, status, error, false detection, phase

### C. DOCUMENTS CONSIDERED TO BE RELEVANT

| Category* | Citation of document, with indication, where appropriate, of the relevant passages | Relevant to claim No. |
| --- | --- | --- |
| PX | CN 114884626 A (SANECHIPS TECHNOLOGY CO., LTD.) 09 August 2022 (2022-08-09) claims 1-14 | 1-14 |
| A | CN 114245972 A (HYUNDAI MOTOR COMPANY et al.) 25 March 2022 (2022-03-25) description, paragraphs [0010]-[0032] | 1-14 |
| A | CN 102577158 A (ICERA INC.) 11 July 2012 (2012-07-11) entire document | 1-14 |
| A | US 2003148738 A1 (LUCENT TECHNOLOGIES, INC.) 07 August 2003 (2003-08-07) entire document | 1-14 |
| A | LG ELECTRONICS. "Discussion on physical layer procedures for NR sidelink" *3GPP TSG RAN WG1 Meeting #101 R1-2003566*, 05 June 2020 (2020-06-05), entire document | 1-14 |

☑ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 July 2023** | **27 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/101715** |

**C.    DOCUMENTS CONSIDERED TO BE RELEVANT**

| Category* | Citation of document, with indication, where appropriate, of the relevant passages | Relevant to claim No. |
|---|---|---|
| A | 乔晓强 等 (QIAO, Xiaoqiang et al.). "Turbo 编码V-BLAST MIMO-OFDM 系统中的 联合迭代判决反馈信道估计与检测 (Joint iterative decision feedback channel estimation and detection for Turbo coded V-BLAST MIMO-OFDM systems)" <br> 通信学报 *(Journal on Communications)*, Vol. 27, No. 1, 31 January 2006 (2006-01-31), <br> entire document | 1-14 |

Form PCT/ISA/210 (second sheet) (July 2022)

**INTERNATIONAL SEARCH REPORT**
**Information on patent family members**

International application No.

**PCT/CN2023/101715**

| Patent document cited in search report | | | Publication date (day/month/year) | Patent family member(s) | | | Publication date (day/month/year) |
|---|---|---|---|---|---|---|---|
| CN | 114884626 | A | 09 August 2022 | None | | | |
| CN | 114245972 | A | 25 March 2022 | EP | 3998726 | A1 | 18 May 2022 |
| | | | | US | 2022294570 | A1 | 15 September 2022 |
| | | | | WO | 2021029596 | A1 | 18 February 2021 |
| | | | | KR | 20210020782 | A | 24 February 2021 |
| CN | 102577158 | A | 11 July 2012 | US | 2012122407 | A1 | 17 May 2012 |
| | | | | DE | 112010002986 | T5 | 13 December 2012 |
| | | | | WO | 2011009647 | A1 | 27 January 2011 |
| | | | | GB | 2472013 | A | 26 January 2011 |
| US | 2003148738 | A1 | 07 August 2003 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210808598